# EUROPÄISCHE PATENTSCHRIFT

(11) **EP 2 828 051 B1**
(45) Veröffentlichungstag und Bekanntmachung des Hinweises auf die Patenterteilung: **09.03.2016**
(21) Anmeldenummer: 13712725.4
(22) Anmeldetag: 15.03.2013
(51) Int. Cl.: B29B 11/16, B29C 70/50, C08G 18/79, C08J 5/18, C08J 5/24, C08J 7/18

(54) **LAGERSTABILE HARZFILME UND DARAUS HERGESTELLTE FASERVERBUNDBAUTEILE**
STORAGE STABLE RESIN FILMS AND FIBRE COMPOUND COMPONENTS MADE THEREOF
FILM EN RÉSINE STABLE LORS DU STOCKAGE ET COMPOSANT COMPOSITE EN FIBRE AINSI FABRIQUÉ

(30) Priorität: 20.03.2012 EP 12160309; 19.10.2012 EP 12189156
(43) Veröffentlichungstag der Anmeldung: 28.01.2015
(73) Patentinhaber: Covestro Deutschland AG, 51373 Leverkusen (DE)
(72) Erfinder: HUPKA, Florian, 40591 Düsseldorf (DE); SCHORNSTEIN, Marcel, 41462 Neuss (DE); WEGENER, Dirk, 40789 Monheim (DE); RASSELNBERG, Harald, 41541 Dormagen (DE)
(74) Vertreter: Levpat
(86) Internationale Anmeldenummer: PCT/EP2013/055415
(87) Internationale Veröffentlichungsnummer: WO 2013/139705

(56) Entgegenhaltungen:
- EP-A1- 2 360 196
- WO-A1-2012/022683
- DE-A1-102010 029 355
- US-A1- 2012 003 890

## Beschreibung

Die vorliegende Erfindung betrifft lagerstabile Harzfilme auf Basis von Polyurethansystemen mit sehr hoher Kennzahl und daraus, durch Verpressen der Harzfilme bei erhöhten Temperaturen und Druck in Kombination mit faserverstärkten Materialien wie Geweben und Gelegen, hergestellte Faserverbundbauteile (Composite-Bauteile, Formkörper) sowie ein Verfahren zu deren Herstellung.

Faserverstärkte Materialien in Form von Prepregs werden bereits in vielen industriellen Anwendungen wegen ihrer bequemen Handhabung und der erhöhten Effizienz bei der Verarbeitung im Vergleich zu der alternativen Nasslaminiertechnologie ("wet-lay-up"-Technologie) eingesetzt.

Industrielle Anwender solcher Systeme verlangen neben einem guten Handling, lange Lagerstabilitäten bei Raumtemperatur aber auch schnelle Zykluszeiten sowie niedrige und energieeffiziente Aushärtetemperaturen der Prepregs.

Eine Voraussetzung dafür sind Matrixkomponenten, die die Herstellung lagerfähiger, für die Weiterverarbeitung hinreichend eigenschaftsstabiler Prepregs gestatten. Dazu ist es erforderlich, dass die Prepregs nicht klebend sein dürfen, sie dürfen aber auch nicht vollständig ausgehärtet sein, vielmehr darf die Harzmatrix lediglich vorpolymerisiert sein, d.h. sie muss noch schmelzbar sein. Anforderungen an die vernetzte Harzmatrix bestehen in einer hohen Grenzflächenhaftung zu den Verstärkungsmaterialien und Einlagerungskomponenten und gegebenenfalls auch zu anderen Materialien, beispielsweise metallischen oder keramischen Materialien. Im vernetzten Zustand sind ferner hohe chemische Stabilität und Wärmeformbeständigkeit gefordert.

Neben Polyestern, Vinylestern und Epoxy-Systemen gibt es eine Reihe spezialisierter Harze im Bereich der vernetzenden Matrix-Systeme. Dazu zählen auch Polyurethan-Harze, die wegen ihrer Zähigkeit, Schadenstoleranz und ihrer Festigkeit beispielsweise zur Herstellung von Composite-Materialien über SRIM (structural reaction injection moulding)- oder Pultrusionsverfahren eingesetzt werden. Polyurethan-Composite weisen auch gegenüber Vinylestern, ungesättigten Polyesterharzen (UPE) oder UPE-Urethan-Hybrid-Harzen eine überlegene Zähigkeit auf.

Prepregs und daraus hergestellte Composite-Bauteile auf der Basis von Epoxy-Systemen werden zum Beispiel in WO 98/50211 beschrieben.

In WO 2006/043019 wird ein Verfahren zur Herstellung von Prepregs auf der Basis von Epoxidharz-Polyurethanpulvern beschrieben.

In DE-A 102010029355 wird ein Verfahren zur Herstellung von lagerstabilen Polyurethan-Prepregs und daraus hergestellte Formkörper beschrieben, die durch ein Direkt-Schmelze-Imprägnierverfahren von faserverstärkten Materialien unter Verwendung von reaktiven Polyurethanzusammensetzungen erhältlich sind. Die hierbei verwendeten, im Wesentlichen aliphatischen Polyisocyanate sind entweder intern blockiert (z.B. als Uretdion) und/oder mit externen Blockierungsmitteln blockiert. Die Reaktionsharzgemische sind bei Temperaturen zwischen 80 und 120°C im Direkt-Schmelz-Imprägnierverfahren anwendbar. Der Nachteil ist, dass die Aushärtetemperatur je nach System zwischen 120°C und 200°C liegt und die Aushärtezeit/Zykluszeit mit bis zu 60 Minuten sehr lang ist, was zu hohen Energie- und Herstellkosten führt. In den Beispielen wird mit einem Verlaufsadditiv gearbeitet, so dass davon auszugehen ist, dass die beschriebenen Systeme hohe Viskositäten besitzen.

In DE-A 102009001793 und DE-A 102009001806 wird ein Verfahren zur Herstellung von lagerstabilen Prepregs, im Wesentlichen aufgebaut aus mindestens einem faserförmigen Träger und mindestens einer reaktiven pulverförmigen Polyurethanzusammensetzung als Matrixmaterial, beschrieben.

Des Weiteren sind Prepregs auf der Basis von pulverförmigen Thermoplasten, insbesondere TPU als Matrix bekannt. In US-A 20040231598 wird eine Methode beschrieben, bei der die Partikel über eine spezielle Beschleunigungskammer mit elektrostatischer Aufladung geführt werden. Diese Apparatur dient zur Beschichtung von Glas-, Aramid- oder Kohlefaser-Substraten für die Herstellung von Prepregs aus thermoplastischen Harzen. Als Harze werden Polyethylen (PE), Polypropylen (PP), Polyetheretherketon (PEEK), Polyethersulfon (PES), Polyphenylsulfon (PPS), Polyimid (PI), Polyamid (PA), Polycarbonat (PC), Polyethylenterephthalat (PET), Polyurethan (PU), Polyester und Fluorpolymere genannt. Die daraus hergestellten thermoplastischen Prepreg-Textilien zeigen inhärente Zähigkeit, ein gutes, viskoelastisches Dämpfungsverhalten, eine unbegrenzte Lagerfähigkeit, gute Chemikalienbeständigkeit und Recyclierbarkeit.

Nachteilig am Prepreg-Verfahren ist, dass gerade im Bereich von Kleinserien die Herstellung eines Prepregs und die anschließende Verpressung zu einem Faserverbundsystem sehr zeit- und kostenintensiv ist. Außerdem ist es schwierig zwischen verschiedenen Gelegearten zu wechseln.

Neben der Herstellung von Faserverbundbauteilen aus vorgefertigten Prepregs ist eine weitere Möglichkeit die Verarbeitung einer thermoplastischen Matrix im Verbund mit faserverstärkten Materialien. Im sogenannten Film-Stacking-Verfahren (Folien-Stapel-Verfahren) werden wechselweise Lagen des Matrixmaterials (meist als Folie) und der Faserschicht (Gelege, Gewebe, Vliesstoff) in eine Pressform eingelegt. Die Pressform wird über die Schmelztemperatur des Matrixmaterials erwärmt. Während des Pressvorgangs durchdringt der aufgeschmolzene Kunststoff die Faserschicht. Das Film-Stacking-Verfahren zeichnet sich durch eine große Flexibilität in Bezug auf den herstellbaren Verbundwerkstoff aus. Der Fasergehalt wird durch Einlegen von Thermoplastfolien und Faserschichten in unterschiedlichen Anteilen variiert. Verschiedene Faserschichten und Matrixmaterialien lassen sich beliebig kombinieren.

Bedingt durch den Schichtaufbau muss die thermoplastische Matrix die Faserschicht durchdringen. Hierin liegt ein großer Nachteil dieses Verfahrens, da bei sehr dichten Faserschichten sehr hohe Pressdrücke erforderlich sind und die Gefahr von nicht durchtränkten Fehlstellen steigt. Darüber hinaus muss beim Film-Stacking-Verfahren in Abhängigkeit vom Thermoplasten bei sehr hohen Temperaturen gearbeitet werden, um das Matrixmaterial in einen niedrigviskosen Zustand zu überführen. Der Thermoplast muss also weit über seine Schmelztemperatur erwärmt werden, umgeformt und anschließend abgekühlt werden.

In DE-A 4104692 wird von einem wirtschaftlichen Verfahren zur Herstellung von Faserverbundbauteilen guter Qualität mit Thermoplastmatrix und flächigen Verstärkungsfasertextilien nach dem Film-Stacking-Verfahren berichtet.

Nachteilig bei der Verwendung von Thermoplasten gegenüber Duroplasten (wie z.B. Polyurethan) ist die verringerte Druckfestigkeit und Steifigkeit, die Oberflächenqualität und die Problematik, dass Thermoplaste, insbesondere bei langzeitigen Lasten und erhöhten Temperaturen, zum Kriechen neigen.

In WO 2012/022683 werden Faserverbundbauteile und ein Verfahren zu deren Herstellung beschrieben. Das Polyurethan, mit dem die Faserschicht getränkt ist, wird aus einem Reaktionsgemisch hergestellt. Das Reaktionsgemisch enthält neben Polyisocyanaten, Polyolen und gegebenenfalls Additiven als wesentlichen Bestandteil ein oder mehrere Polyepoxide. Das in dieser Anmeldung offenbarte Polyurethan hat den Nachteil einer für die Herstellung von Prepregs nicht ausreichenden Lagerstabilität, charakterisiert z.B. durch eine niedrige Glasübergangstemperatur. Darüber hinaus weist dieses System nicht den für eine Nachvernetzung zu fertigen Bauteilen erforderlichen NCO-Wert auf.

Aufgabe der vorliegenden Erfindung war es daher, Faserverbundbauteile zur Verfügung zu stellen, die gute Druckfestigkeit und Steifigkeit (gute mechanische Eigenschaften) und gute Oberflächenqualität aufweisen und die einfach und bei niedrigen Temperaturen herstellbar sind.

Diese Aufgabe konnte durch die erfmdungsgemäßen, nicht vollständig ausgehärteten Harzfilme und deren Einsatz zur Herstellung der erfmdungsgemäßen Faserverbundbauteile gelöst werden.

Gegenstand der Erfindung sind daher Harzfilme, die aus nicht vollständig ausgehärtetem Polyurethan (Matrixmaterial) mit einem NCO-Wert von 8 Gew.-% bis 16 Gew.-% (gemessen nach DIN EN ISO 14896: 2009-07-Verfahren A) und mit einem T_{g}-Wert von unter 40°C (gemessen nach DIN EN ISO 53765-A-20) bestehen, wobei das Polyurethan erhältlich ist aus einem Reaktionsgemisch bestehend aus
A) einem oder mehreren Di- und/oder Polyisocyanaten aus der Gruppe bestehend aus aromatischen Di- und/oder Polyisocyanaten und deren polymere Homologen sowie Abmischungen daraus
B) einer Polyolkomponente aus einem oder mehreren Polyolen mit einer mittleren OH-Zahl von 30 bis 1000 mg KOH/g, einer mittleren Funktionalität von 1,9 bis 2,5
C) einem oder mehreren Dianhydrohexitolen
D) einem oder mehreren latenten Katalysatoren, die bei Temperaturen von 50° bis 100°C katalytisch wirksam sind
E) gegebenenfalls Hilfs- und/oder Zusatzstoffen, ausgenommen Polyepoxide
wobei das Reaktionsgemisch bei 40 °C eine anfängliche Viskosität von 30 bis 500 mPas (gemessen nach DIN 53019), bevorzugt 70 bis 250 mPas, besonders bevorzugt 70 bis 150 mPas aufweist und das Verhältnis der Anzahl der NCO-Gruppen der Komponente A) zu der Anzahl der OH-Gruppen der Komponente B) bevorzugt von 1,35:1 bis 10:1, besonders bevorzugt von 1,4:1 bis 5,0:1 ist.

Die erfindungsgemäßen Harzfilme werden aus den Komponenten A) bis E) hergestellt, wobei Epoxide nicht eingesetzt werden dürfen (siehe auch Vergleichsbeispiel 2). Beim Einsatz von Epoxiden können keine lagerstabilen, nicht vollständig ausgehärteten Polyurethane erhalten werden.

Der erfindungsgemäße Harzfilm ist nahezu klebfrei und schmilzt bei niedrigen Temperaturen, wobei die Viskosität nach dem Aufschmelzen niedrig ist, wodurch eine gute Benetzung der Faserschicht gewährleistet ist. Zudem ist der Harzfilm über mehrere Wochen bei Raumtemperatur lagerstabil. Der Harzfilm härtet bei niedrigen Temperaturen und innerhalb kurzer Zeit aus, so dass kurze Zykluszeiten erhalten werden.

Überraschend wurde gefunden, dass die Herstellung von lagerstabilen, aber noch reaktiven (nicht vollständig ausgehärteten) Harzfilmen auf Polyurethanbasis mit einem Polyurethanreaktivsystem mit hoher Kennzahl möglich ist, wobei die Polyurethanharzfilme eine im Vergleich zu Thermoplasten extrem schnelle Aushärtezeit aufweisen. Die erfindungsgemäßen Harzfilme weisen beschriebenen faserverstärkten Thermoplasten auf. Vorteile liegen insbesondere in der niedrigeren Schmelztemperatur des erfmdungsgemäßen Harzfilms sowie in der Verarbeitung bei niedrigeren Drücken. Darüber hinaus findet beim erfmdungsgemäßen Harzfilm in Kombination mit Faserschichten aufgrund der niedrigen Viskosität des geschmolzenen Harzfilms eine sehr gute Fasertränkung statt. Der Harzfilm härtet unter Temperaturzufuhr schnell vollständig aus, und muss im Gegensatz zum Thermoplasten nicht wieder in der Form und gegebenenfalls unter Druck abgekühlt werden, um auszuhärten.

Ein weiterer Gegenstand der Erfindung sind flächige Faserverbundbauteile enthaltend mindestens eine flächige Faserschicht, die mindestens ein erfmdungsgemäßes Polyurethanharz enthält, wobei das Harz bzw. die Harze vollständig ausgehärtet ist bzw. sind.

Ein weiterer Gegenstand der vorliegenden Erfindung ist ein Verfahren zur Herstellung der erfmdungsgemäßen Harzfilme, welches dadurch gekennzeichnet ist, dass
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen von 10° bis 80°C zur Herstellung einer Reaktivmischung vermischt wird,
iii) die Reaktivmischung aus ii) zu einem Harzfilm durch teilweise Härtung verarbeitet wird.

Bevorzugt werden die Harzfilme zur Herstellung der Faserverbundbauteile als Folie oder Platte auf die flächige Faserschicht aufgebracht. Man kann die Folie oder Platte jedoch auch zu Granulat, Fasern oder Pulver zerkleinern und das zerkleinerte Granulat, Fasern oder Pulver gleichmäßig auf die flächige Faserschicht aufbringen.

Die erfmdungsgemäßen Harzfilme können als Folie vor der Weiterverarbeitung der Form der Faserschicht entsprechend zugeschnitten werden.

Die Harzfilme haben bevorzugt eine Schichtdicke von 1µm bis 1cm, bevorzugt von 0,1mm bis 5mm.

Ein weiterer Gegenstand der Erfindung ist ein Verfahren zur Herstellung der erfindungsgemäßen Faserverbundbauteile, welches dadurch gekennzeichnet ist, dass
ein oder mehrere flächige Faserschichten und ein oder mehrere erfindungsgemäß hergestellte Harzfilme, vorzugsweise abwechselnd, übereinander gelegt werden und der mindestens eine Harzfilm bei 110° bis 140°C und einem Druck von 1 bis 100 bar, bevorzugt von 1 bis 50 bar, besonders bevorzugt von 1 bis 10 bar oder unter Vakuum innerhalb von 1 bis 4 Minuten, bevorzugt von 1 bis 3 Minuten vollständig ausgehärtet wird.

Die Viskositäten werden nach DIN EN ISO 53019 (Platte/Platte) bestimmt.

Die erfindungsgemäßen Harzfilme bzw. die daraus hergestellten Faserverbundbauteile können in unterschiedlichen Anwendungen im Bereich der Bau-, der Automobil-, der Luft- und Raumfahrt-Industrie, der Energietechnik (Windkraftanlagen) und im Boots- und Schiffbau eingesetzt werden.

Das Prinzip zur Herstellung der Harzfilme besteht darin, dass zunächst eine reaktive Polyurethanzusammensetzung aus den einzelnen Komponenten A), B), C), D) und E) hergestellt wird. Die Komponenten B), C), D) und E) werden zuvor bei 40 bis 80 °C zu einer Polyolformulierung vermischt. Anschließend wird das homogene Gemisch bei Temperaturen unterhalb von 80 °C (vorzugsweise zwischen 10° und 80°C) mit der Komponente A) vermischt. Diese reaktive Polyurethanzusammensetzung wird dann direkt z.B. mittels eines Rakels vorzugsweise zwischen zwei Trennfolien zu einem nicht vollständig gehärteten Harzfilm verarbeitet. Eine weitere Vernetzungsreaktion durch thermische Belastung der Polyurethanzusammensetzung wird durch das Arbeiten bei Raumtemperatur vermieden. Danach können die lagerfähigen Harzfilme zu einem späteren Zeitpunkt zu Faserverbundbauteilen weiterverarbeitet werden. Die erfindungsgemäßen Polyurethanharzfilme schmelzen bei leicht erhöhten Temperaturen zu einer sehr niedrigviskosen Flüssigkeit, so dass eine sehr gute anschließende Imprägnierung der Faserschicht erfolgen kann.

Die erfindungsgemäß eingesetzten Polyurethan-Reaktionsmischungen benötigen im Gegensatz zu den in DE-A 102010029355 verwendeten Reaktionsmischungen weder externe Blockierungsmittel noch blockierte Isocyanatkomponenten. Mit den erfindungsgemäß eingesetzten Harzfilmen ist eine gute Fasertränkung und ein schnelles Aushärten im Faserverbund bei niedrigen Temperaturen möglich. Sie ermöglichen so eine schnelle Fertigung der Faserverbundbauteile.

Ein weiterer Vorteil der erfindungsgemäß eingesetzten Reaktionssysteme ist, dass beim Einsatz von aromatischen Polyisocyanaten Faserverbundbauteile mit hohen Glasübergangstemperaturen von über 130°C erhalten werden und dass ein Aushärten bei niedrigen Temperaturen möglich ist. Im Gegensatz zu Thermoplasten weisen die Harzfilme eine niedrige Erweichungs- bzw. Schmelztemperatur auf, so dass eine einfache Verarbeitung gewährleistet ist, also ein günstiger Schmelzfluss vorliegt, und gleichzeitig eine hohe Glasübergangstemperatur. Die Verarbeitung von Thermoplasten erfordert hingegen sehr hohe Drücke und Temperaturen.

Die erfindungsgemäß hergestellten Harzfilme weisen außerdem eine sehr hohe Lagerstabilität von mehreren Wochen bei Raumtemperatur auf. Die Harzfilme sind nahezu klebfrei und können daher einfach weiterverarbeitet werden.

Der NCO-Wert des nicht vollständig ausgehärteten Polyurethans gibt den Gewichtsanteil an nicht reagierten Isocyanatgruppen im Polyurethan an. Der NCO-Wert wird über einen Zeitraum von mehreren Wochen bestimmt. Dieser NCO-Wert ist außerdem ein Indiz für die Lagerstabilität der Harzfilme.

Der NCO-Wert der lagerstabilen Harzfilme wird wöchentlich über einen Zeitraum von 7 Wochen bestimmt. Der NCO-Wert der erfindungsgemäßen Harzfilme liegt in einem Bereich von 8 Gew.-% bis 16 Gew.-%, bevorzugt von 10 Gew.-% bis 16 Gew.-% und ganz besonders bevorzugt von 10 Gew.-% bis 14Gew.-%. Der NCO-Wert der erfindungsgemäßen Harzfilme ändert sich, auch ohne Zusatz von externen Blockierungsmitteln beziehungsweise sogenannten Stoppern, über einen Zeitraum von 7 Wochen kaum. Der NCO-Wert wird nach DIN EN ISO 14896:2009-07-Verfahren A bestimmt.

Zur Herstellung der Faserverbundbauteile kann z.B. nach dem diskontinuierlich arbeitenden Film-Stacking-Verfahren mit einer getakteten Presse gearbeitet werden. Vor der vollständigen Vernetzung können die Harzfilme und Faserschichten vorzugsweise zugeschnitten, gegebenenfalls vernäht oder anderweitig fixiert werden. In die Presse wird dann entweder ein Stapel aus Harzfilmen und aus flächigen Faserschichten oder eine einzelne Schicht aus Harzfilm und aus Faserschicht eingelegt. Anschließend wird die Presse geschlossen, aufgeheizt und unter Druck, drucklos, gegebenenfalls unter Anlegen von Vakuum verpresst. Im Rahmen der vorliegenden Erfindung erfolgt dieser Vorgang der Herstellung der Faserverbundbauteile z. B. in einer Presse je nach Aushärtungszeit bei Temperaturen unterhalb von 140 °C, bevorzugt von 110° bis 140°C, besonders bevorzugt von 110° bis 135°C. Anschließend wird das erzeugte Verbundbauteil aus der Form entnommen.

Während der Verarbeitung der Harzfilme zu den Faserverbundbauteilen (z. B. durch Verpressen bei erhöhten Temperaturen) erfolgt durch Aufschmelzen des Harzfilms zu einer niedrigviskosen Harzfilmschmelze eine sehr gute Imprägnierung der Faserschicht, bevor durch die vollständige Vernetzungsreaktion bei erhöhten Temperaturen der Harzfilm durchhärtet. Vorzugsweise wird die Werkzeugkavität der Form vor dem Verpressen zum Faserverbundbauteil mit einem Trennmittel versehen. Es können weitere Schutz- oder Dekor-Schichten vor dem Einbringen der Faserschichten und/oder der Harzfilme in das Werkzeug eingetragen werden, wie beispielsweise eine oder mehrere Gelcoatschichten.

Besonders bevorzugt ist ein Faserverbundbauteil, welches in der Faserschicht ein Polyurethan aufweist, das aus 50-80 Gew.-%, bevorzugt 65-75 Gew.-% Polyisocyanaten (A), 15-30 Gew.-%, bevorzugt 18-25 Gew.-% Polyolen (B), 5-15 Gew.-%, bevorzugt 8-12 Gew.-% Dianhydrohexitolen (C), 0,1-3 Gew.-%, bevorzugt 0,3-1,2 Gew.-% Katalysator (D) und 0-3 Gew.-%, bevorzugt 0,1-0,5 Gew.-% Additiven (E) erhältlich ist, wobei die Summe der Gewichtsanteile der Komponenten 100 Gew.-% ergibt.

Die Faserschicht besteht vorzugsweise aus faserförmigem Material aus Glas, Kohlenstoff, Kunststoffen, aus Metallfasern, Naturfasern oder mineralischen Fasermaterialien wie Basaltfasern oder keramischen Fasern oder Gemischen daraus.

Der Faseranteil im Faserverbundteil beträgt vorzugsweise mehr als 45 Gew.-%, besonders bevorzugt mehr als 50 Gew.-%, bezogen auf das Gesamtgewicht des Faserverbundbauteils.

Als Polyisocyanatkomponente A) kommen die üblichen aromatischen Di- und/oder Polyisocyanate zum Einsatz. Beispiele solcher geeigneten Polyisocyanate sind 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI), 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt von zwischen 60 und 100 Gew.-%, bevorzugt zwischen 70 und 95 Gew.-%, besonders bevorzugt zwischen 80 und 90 Gew.-%. Der NCO-Gehalt des verwendeten Polyisocyanates sollte vorzugsweise über 25 Gew.-%, bevorzugt über 30 Gew.-% liegen. Die Viskosität des Isocyanates sollte vorzugsweise ≤ 250 mPas (bei 25°C), bevorzugt ≤ 100 mPas (bei 25°C) und besonders bevorzugt von ≤ 30 mPas (bei 25°C) sein.

Die OH-Zahl der Komponente B) gibt im Falle eines einzelnen zugesetzten Polyols dessen OH-Zahl an. Im Falle von Mischungen wird die OH-Zahl der Mischung angegeben. Dieser Wert kann anhand von DIN EN ISO 53240 bestimmt werden.

Die Polyolkomponente (Polyol oder Polyolgemisch) B) weist eine mittlere OH-Zahl von 30 bis 1000 mg KOH/g, bevorzugt von 50 bis 300 mg KOH/g und besonders bevorzugt von 60 bis 250 mg KOH/g auf. Bevorzugt hat die eingesetzte Polyolkomponente eine mittlere Funktionalität von 1,9 bis 2,5.

Erfindungsgemäß können als Polyolkomponente B) Polyetherpolyole, Polyesterpolyole oder Polycarbonatpolyole eingesetzt werden, bevorzugt sind Polyesterpolyole. Erfindungsgemäß verwendbare Polyesterpolyole sind beispielsweise Kondensationsprodukte von 1,4-Butandiol, Ethylenglycol und Adipinsäure.

Die Polyolkomponente B) kann auch Fasern, Füllstoffe und Polymere enthalten.

Dianhydrohexitole können beispielsweise durch zweifache Wasserabspaltung aus Hexitolen, wie z.B. Mannitol, Sorbitol und Iditol, hergestellt werden. Diese Dianhydrohexitole sind unter den Namen Isosorbid, Isomannid und Isoidid bekannt und haben folgende Formel:
Isosorbid, 1,4:3,6-dianhydro-D-glucitol: Isomannid, 1,4:3,6-dianhydro-D-mannitol: 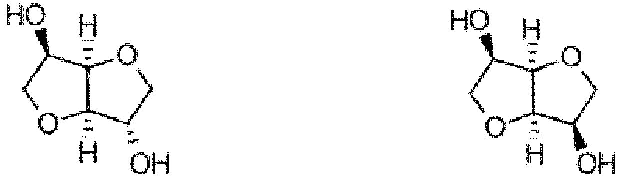
Isoidid, 1,4:3,6-dianhydro-L-iditol:

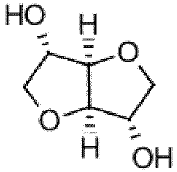

Besonders bevorzugt ist das Isosorbid. Isosorbid ist beispielsweise als Polysorb^{®} P von der Firma Roquette oder als Addolink^{®} 0312 von der Firma Rhein Chemie erhältlich. Es können auch Gemische aus den vorgenannten Verbindungen verwendet werden.

Als latente Katalysatoren D) werden bevorzugt Katalysatoren eingesetzt, die im Bereich zwischen 50° und 100°C katalytisch aktiv sind. Typische latente Katalysatoren sind beispielsweise blockierte Amin- und Amidin-Katalysatoren der Hersteller Air Products (wie z.B. Polycat^{®} SA-1/10, Dabco KTM 60) und Tosoh Corporation (wie z.B. Toyocat^{®} DB 2, DB 30, DB 31, DB 40, DB 41, DB 42, DB 60, DB 70). Es können aber auch alle weiteren, typischen latenten Katalysatoren aus der Polyurethanchemie mit einer sogenannten Schalttemperatur von 50°C bis 100°C eingesetzt werden.

Gegebenenfalls können Hilfs- und/oder Zusatzstoffe (Additive) E) zugesetzt werden. Hierbei handelt es sich beispielsweise um Entlüfter, Entschäumer, Trennmittel, Füllstoffe, Fließhilfen, organische oder anorganische Farbstoffe, Treibmittel und Verstärkungsstoffe. Weitere bekannte Additive und Zusatzmittel können bei Bedarf verwendet werden. Polyepoxide werden nicht eingesetzt.

Als Fasermaterial können geschlichtete oder ungeschlichtete Fasern, beispielsweise Glasfasern, Kohlefasern, Metallfasern (z.B. Stahl- oder Eisenfasern), Naturfasern, Aramidfasern, Polyethylenfasern, Basaltfasern oder Carbon Nanotubes (CNTs) eingesetzt werden. Besonders bevorzugt sind Kohlefasern. Die Fasern können als Kurzfasern mit einer Länge von 0,1 bis 50 mm verwendet werden. Bevorzugt sind endlosfaserverstärkte Verbundbauteile durch den Einsatz von kontinuierlichen Fasern. Die Fasern in der Faserschicht können unidirektional, regellos verteilt oder verwoben angeordnet sein. In Bauteilen mit einer Faserschicht aus mehreren Lagen besteht die Möglichkeit der Faserorientierung von Lage zu Lage. Hierbei kann man unidirektionale Faserschichten, Kreuzverbundschichten oder multidirektionale Faserschichten herstellen, wobei unidirektionale oder verwebte Lagen übereinander geschichtet werden. Besonders bevorzugt sind Faser-Halbzeuge als Fasermaterial, wie beispielsweise Gewebe, Gelege, Geflechte, Matten, Vliese, Gestricke und Gewirke oder 3D-Faser-Halbzeuge.

Die erfindungsgemäßen Faserverbundbauteile können beispielsweise zur Herstellung von Karosseriebauteilen von Automobilen oder im Flugzeugbau, Rotorblättern von Windkraftanlagen, zur Herstellung von Bauteilen des Gebäude- bzw. Straßenbaus (z.B. Kanaldeckel) und sonstigen hochbelasteten Strukturen verwendet werden.

Die erfindungsgemäßen Harzfilme können in unterschiedlichen Anwendungen im Bereich der Bau-, der Automobil-, der Luft- und Raumfahrt-Industrie, der Energietechnik (z.B. Windkraftanlagen) und im Boot- und Schiffbau eingesetzt werden.

Die erfindungsgemäßen Harzfilme können auch als Schmelzklebstoffe z.B. in der Verpackungs- und Kleidungsindustrie, Elektronik, Möbel- und Holzindustrie, Glasindustrie und in der Schuhindustrie eingesetzt werden.

Die Erfindung soll anhand der nachfolgenden Beispiele näher erläutert werden.

### Beispiel 1:

Es wurden lagerstabile Harzfilme aus den erfindungsgemäßen Systemen aus Polyisocyanaten, Polyolen, Additiven und latenten Katalysatoren hergestellt und anschließend mit einem Glasfasergelege zu einem Faserverbundbauteil ausgehärtet. Diese wurden sowohl mit Faserverbundbauteilen auf Basis von Prepregs aus Polyurethanreaktivsystemen aus intern blockiertem Polyisocyanat und Polyol als auch mit Faserverbundbauteilen auf Basis von Thermoplasten verglichen.

21,3 g Komponente C) wurden mit 42,5 g Komponente B), 1,5 g Toyocat^{®} DB 40 und 0,66 g der Komponente E) bei 70 °C vermischt. Anschließend wurden 137,5 g Desmodur^{®} VP.PU 60RE11 zugegeben und mit einem Speedmixer homogenisiert. Anschließend wurde für die Herstellung der lagerstabilen Harzfilme die Polyurethanzusammensetzung bei Raumtemperatur mittels eines Rakels zwischen zwei Trennfolien zu einem Harzfilm verarbeitet und bei Raumtemperatur gelagert. Der NCO-Wert des Prepregs lag nach 24 Stunden bei 14,8 %. Danach wurden die zwei Trennfolien entfernt und die Harzfilme auf ein Glasfasergelege gelegt, so dass ein Glasfasergehalt von etwa 55 Gewichts-%, bezogen auf das spätere Bauteil, erreicht wurde. Es wurden drei solcher Glasfasergelege und zwei Harzfilmschichten abwechselnd zu einem Stapel übereinander in eine Pressform gelegt und anschließend bei 130 °C und 5 bar innerhalb von zwei Minuten zu einem ca. 2,2 mm dicken Faserverbundbauteil verpresst. An den Probenkörpern der Bauteile wurden die mechanischen Messungen vorgenommen. Der Glasfasergehalt wurde durch Veraschung der Probenkörper nach DIN EN ISO 1172 bestimmt. Die interlaminare Scherfestigkeit wurde nach DIN EN ISO 3597-4 bestimmt.

### Vergleichsbeispiel 2:

10,4 g Komponente C) wurden mit 20,9 g Komponente B), 0,75 g Toyocat^{®} DB 40, 0,33 g der Komponente E) und 106,8 g Eurepox^{®} 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) bei 70 °C vermischt. Anschließend wurden 67,6 g Desmodur^{®} VP.PU 60RE11 bei Raumtemperatur zugegeben und mit einem Speedmixer homogenisiert. Direkt nach dem Vermischen stieg die Viskosität auf ca. 5000 mPas an. Der NCO-Wert der Matrix lag nach 60 Minuten bei 4,9%, die Matrix war fest.

Das NCO/OH Verhältnis gibt das Verhältnis der Anzahl der NCO-Gruppen in der Polyisocyanatkomponente A) zu der Anzahl der OH-Gruppen in der Komponente B) und C) an.

### Verwendete Ausgangsverbindungen:

Komponente A): Desmodur^{®} VP.PU 60RE11 (Polyisocyanat der Firma Bayer MaterialScience AG; Gemisch von Diphenylmethandiisocyanat und Polyphenylenpolymethylenpolyisocyanat; NCO-Gehalt 32,6 Gew.-%; Viskosität bei 25 °C: 20 mPas)
Komponente B): linearer Polyesterpolyol aus Adipinsäure, Ethylenglycol und 1,4-Butandiol, Hydroxylzahl 86 mg KOH/g und Funktionalität 2, Viskosität bei 25°C: 250±50 mPas
Komponente C): Isosorbid (Addolink^{®} 0312 der Firma Rhein Chemie, Hydroxylzahl 768 mg KOH/g, Schmelzpunkt 60 °C bis 63 °C)
Komponente D): Toyocat^{®} DB 40: latenter Katalysator (blockiertes Amin) der Firma TOSOH Corporation
Komponente E): internes Trennmittel Edenor^{®} Ti 05 der Firma Cognis Deutschland, Säurezahl 200 mg KOH/g, Funktionalität 1
Glasfasergewebe: HPT 1040-E0/3AC11, 90°/0° der Firma SGL KÜMPERS GmbH & Co. KG, Flächengewicht 1036 g/m²

### Verwendete Messgeräte und Normen:

DSC: Messgerät DSC Q 20 V24.8 Build 120 der Fa. Texas Instruments
Viskosimeter: MCR 501 der Fa. Anton Paar
DIN EN ISO 53019 (d/dt = 60 l/s): d/dt = Scherrate
DIN EN ISO 53765-A-20: A-20 = Bestimmung des Glasübergangspunktes mit einer Temperaturänderung von 20 Kelvin/Minute
DIN EN ISO 14896:2009-07-Verfahren A: Verfahren A = NCO-Wertbestimmung mittels Titration

**Tabelle 1:**

| Beispiele | Beispiel 1 | Vergleichs-beispiel2 | * | ** (TPU) |
|---|---|---|---|---|
| NCO/OH Äquivalentverhältnis | 2,95:1 | 1,1:1 | 1:1 | - |
| NCO/Epoxid | | 1,1:1 | | |
| NCO/Epoxid Äquivalentverhältnis | | 1,1:1 | | |
| Viskosität bei 40 °C (direkt nach dem Vermischen) [mPas]; gemessen nach DIN EN ISO 53019 (d/dt = 60 l/s) | ca. 10 mPas | ca. 5000 | keine homogene Schmelze, da Schmelzpunkt von Fineplus PE 8078 > 60 °C | |
| Lagerfähigkeit des Harzfilms [nach Tagen]; gemessen anhand der Glasübergangstemperatur Tg [°C] nach DIN EN ISO 53765-A-20 | nach 7 Tagen: -21 | nach 1 Tag: 49 | nach 2 Tagen: 50 | |
| | nach 14 Tagen: -19 | | nach 17 Tagen: 55 | |
| | | | nach 30 Tagen: 56 | |
| | nach 21 Tagen -9 | | nach 47 Tagen: 55 | |
| | nach 49 Tagen: 0 | | | |
| NCO-Wert des Prepregs [nach Tagen]; gemessen nach DIN EN ISO 14896:2009-07-Verfahren A [Gew.-%] | Nach 1 Tag: 14,8 | Nach 1 Tag: ca. 4,4 | | |
| | Nach 7 Tagen: 13,2 | | | |
| | Nach 14 Tagen: 12,9 | | | |
| | Nach 21 Tagen: 12,8 | | | |
| | Nach 35 Tagen: 12,1 | | | |
| | Nach 42 Tagen: 11,9 | | | |
| | Nach 49 Tagen: 11,7 | | | |
| Glasübergangstemperatur der ausgehärteten Matrix (T_{g}) [°C] (ohne Glasfaser) nach DIN EN ISO 53765-A-20 | ca. 146 | ca. 60 | | |
| Presszeit bis zur Entformung des fertigen Formteils | 2 min bei 130 °C | 30 sek bei Raumtemperatur | 30 min; die Temperatur wird in dieser Zeit von 90 °C auf 170 °C angehoben | 5 min bei 280 °C |
| Glasfasergehalt [Gew.-%] nach DIN EN ISO 1172 | 55 | - | >50 | 60 |
| Interlaminare Scherfestigkeit 0°-Richtung (ShortBeam) [N/mm²] nach ISO 3597-4 | 52 | - | 41 | 48 |

| | | | | |
|---|---|---|---|---|
| Vergleichsdaten aus DE-A 102010029355 (*) und DE 4104692 A1 (**) | | | | |

Die Lagerstabilität der Harzfilme wurde sowohl anhand der Glasübergangstemperatur (T_{g}) mittels DSC-Untersuchungen, als auch anhand des NCO-Wertes [Gew.-%]. bestimmt. Aus den Werten aus der Tabelle geht hervor, dass die Vernetzungsfähigkeit der erfindungsgemäßen Harzfilme durch die Lagerung bei Raumtemperatur über einen Zeitraum von 7 Wochen nicht beeinträchtigt wurde.

Die Verfestigungszeit bei den Verbundbauteilen auf Basis von Prepregs ist erheblich länger (siehe Daten aus DE-A 102010029355), wohingegen die Verfestigungszeit bei den Verbundbauteilen auf Basis von Thermoplasten zwar in der Größenordnung der erfindungsgemäßen Verbundbauteile liegt, allerdings bei sehr viel höheren Temperaturen (5 min. bei 280°C) gearbeitet werden muss.

Im Vergleichsbeispiel 2_wurde zum erfindungsgemäßen System aus Beispiel 1 eine entsprechende Menge Eurepox^{®} 710 (Bisphenol A Epichlorhydrinharz mit durchschnittlichem Molekulargewicht ≤ 700 g/mol; Epoxidäquivalent 183-189 g/eq; Viskosität bei 25 °C: 10000-12000 mPas) hinzugegeben, so dass ein Äquivalentverhältnis von NCO-Gruppen zu Epoxidgruppen von 1,1:1 entstand. Direkt nach dem Vermischen und homogenisieren stieg die Viskosität des Reaktionsgemisches auf ca. 5000 mPas an. Nach 30 Sekunden lag die Matrix nahezu vollständig durchreagiert vor, wodurch ein Aufschmelzen bei höheren Temperaturen nicht mehr möglich war. Die Glasübergangstemperatur lag bereits nach 24 Stunden bei 49 °C und der NCO-Wert bei unter 4,4 Gew.-%. Daher war das Herstellen von lagerstabilen Harzfilmen in Anwesenheit von Epoxiden nicht möglich.

## Patentansprüche

1. Harzfilm bestehend aus nicht vollständig ausgehärtetem Polyurethan mit einem NCO-Wert von 8 Gew.-% bis 16 Gew.-% (gemessen nach DIN EN ISO 14896: 2009-07-Verfahren A) und mit einem T_{g}-Wert von unter 40°C (gemessen nach DIN 53765-A-20), wobei das Polyurethan erhältlich ist aus einem Reaktionsgemisch bestehend aus
A) einem oder mehreren Di- und/oder Polyisocyanaten aus der Gruppe bestehend aus aromatischen Di- und/oder Polyisocyanaten und deren polymere Homologen sowie Abmischungen daraus
B) einer Polyolkomponente aus einem oder mehreren Polyolen mit einer mittleren OH-Zahl von 30 bis 1000 mg KOH/g (gemessen nach DIN EN ISO 53240), einer mittleren Funktionalität von 1,9 bis 2,5
C) einem oder mehreren Dianhydrohexitolen
D) einem oder mehreren latenten Katalysatoren, die im Bereich von 50° bis 100°C katalytisch aktiv sind
E) gegebenenfalls Hilfs- und/oder Zusatzstoffen, ausgenommen Polyepoxide
wobei das Reaktionsgemisch bei 40 °C eine Anfangsviskosität von 30 bis 500 mPas (gemessen nach DIN 53019) aufweist und das Verhältnis der Anzahl der NCO-Gruppen der Komponente A) zu der Anzahl der OH-Gruppen der Komponente B) von 1,35:1 bis 10:1 ist.

2. Harzfilm gemäß Anspruch 1, wobei die Komponente C) in Mengen von 5 bis 15 Gew.-%, bezogen auf die Komponenten A) bis E), vorliegt.

3. Flächige Faserverbundbauteile bestehend aus mindestens einem Harzfilm gemäß Anspruch 1 oder 2 und mindestens einer flächigen Faserschicht,wobei der Harzfilm vollständig ausgehärtet ist.

4. Flächige Faserverbundbauteile gemäß Anspruch 3, **dadurch gekennzeichnet, dass** die Faserschicht aus faserförmigem Material aus Glas, Kohlenstoff, Kunststoffen, aus Metallfasern, Naturfasern oder mineralischen Fasermaterialien wie Basaltfasern oder keramischen Fasern oder Gemischen daraus besteht.

5. Verfahren zur Herstellung von Harzfilmen gemäß Anspruch 1 oder 2, **dadurch gekennzeichnet, dass**
i) die Komponenten B) bis E) bei Temperaturen von 40° bis 80°C, vorzugsweise von 50° bis 70°C, zur Herstellung einer Polyolformulierung X gemischt werden,
ii) die Polyolformulierung X aus Schritt i) mit der Komponente A) bei Temperaturen zwischen 10° und 80°C zur Herstellung einer Reaktivmischung vermischt wird,
iii) die Reaktivmischung aus ii), vorzugsweise zwischen zwei Trennfolien, zu einem teilweise gehärteten Harzfilm verarbeitet wird.

6. Verfahren zur Herstellung von Faserverbundbauteilen gemäß Anspruch 3 oder 4, **dadurch gekennzeichnet, dass**
ein oder mehrere nach dem Verfahren gemäß Anspruch 5 hergestellten Harzfilme und eine oder mehrere Faserschichten in Lagen aufeinander gelegt werden und der eine oder die mehreren Harzfilmen bei 110° bis 140°C unter einem Druck von 1 bis 100 bar oder unter Vakuum innerhalb von 1 bis 4 Minuten ausgehärtet werden.

7. Verwendung der Harzfilme gemäß Anspruch 1 oder 2 oder der flächigen Faserverbundbauteile gemäß Anspruch 3 oder 4 zur Herstellung von Karosseriebauteilen von Automobilen oder im Flugzeugbau, in Bauteilen des Gebäude- bzw. Straßenbaus (z.B. Kanaldeckel), zur Herstellung von Rotorblättern von Windkraftanlagen und hochbelasteten Strukturen und als Klebschicht zwischen Schichten aus Glas, Kunststoff und/oder Metall.

## Claims

1. Resin film composed of polyurethane that has not been fully hardened, with an NCO value of from 8% by weight to 16% by weight (measured in accordance with DIN EN ISO 14896: 2009-07-Method A), and that has a T_{g}-value below 40°C (measured in accordance with DIN 53765-A-20), where the polyurethane is obtainable from a reaction mixture composed of
A) one or more di- and/or polyisocyanates from the group consisting of aromatic di- and/or polyisocyanates and polymeric homologs of these, and also blends thereof
B) a polyol component made of one or more polyols with an average OH number of from 30 to 1000 mg KOH/g (measured in accordance with DIN EN ISO 53240), having an average functionality of from 1.9 to 2.5
C) one or more dianhydrohexitols
D) one or more latent catalysts which are catalytically active at temperatures of from 50°C to 100°C
E) optionally auxiliaries and/or additives, other than polyepoxides
where the initial viscosity of the reaction mixture at 40°C is from 30 to 500 mPas (measured in accordance with DIN 53019), and the ratio of the number of the NCO groups in component A) to the number of the OH groups in component B) is from 1.35:1 to 10:1.

2. Resin film according to Claim 1, where quantities present of component C) are from 5 to 15% by weight, based on components A) to E).

3. Sheet-like fiber-composite components composed of at least one resin film according to Claim 1 or 2 and of at least one sheet-like fiber layer, where the resin film has been fully hardened.

4. Sheet-like fiber-composite components according to Claim 3, **characterized in that** the fiber layer is composed of fibrous material made of glass, carbon, synthetic polymers, of metal fibers, natural fibers, or mineral fiber materials, such as basalt fibers, or of ceramic fibers, or of mixtures thereof.

5. Process for the production of resin films according to Claim 1 or 2, **characterized in that**
i) components B) to E) are mixed at temperatures from 40° to 80°C, preferably from 50° to 70°C, to produce a polyol formulation X,
ii) the polyol formulation X from step i) is mixed with component A) at temperatures from 10° to 80°C to produce a reactive mixture,
iii) the reactive mixture from ii), preferably between two release foils, is processed to give a partially cured resin film.

6. Process for the production of fiber-composite components according to Claim 3 or 4, **characterized in that**
one or more resin films produced by the process according to Claim 5 and one or more fiber layers are mutually superposed, and the one or the more resin films are hardened at from 110° to 140°C under a pressure of from 1 to 100 bar or in vacuo within a period of from 1 to 4 minutes.

7. Use of the resin films according to Claim 1 or 2 or of the sheet-like fiber-composite components according to Claim 3 or 4 for the production of bodywork components of automobiles or in aircraft construction, in components for construction of buildings or of roads (e.g. manhole covers), for the production of rotor blades of wind turbines and of structures exposed to high loads, and as adhesive layer between layers made of glass, synthetic polymer, and/or metal.

## Revendications

1. Film de résine consistant en un polyuréthanne non entièrement durci ayant un indice NCO de 8 % en poids à 16 % en poids (mesuré selon DIN EN ISO 14896:2009-07-Procédé A) et une T_{g} inférieure à 40°C (mesurée selon DIN 53765-A-20), le polyuréthanne pouvant être obtenu à partir d'un mélange réactionnel consistant
A) un ou plusieurs di- et/ou polyisocyanates du groupe consistant en les di- et/ou polyisocyanates aromatiques et leurs homologues polymères, ainsi que les mélanges de ceux-ci,
B) un composant polyol constitué d'un ou plusieurs polyols ayant un indice d'OH moyen de 30 à 1000 mg KOH/g (mesuré selon DIN EN ISO 53240) et une fonctionnalité moyenne de 1,9 à 2,5,
C) un ou plusieurs dianhydrohexitols,
D) un ou plusieurs catalyseurs latents, qui sont catalytiquement actifs dans la plage de 50 à 100°C,
E) éventuellement des adjuvants et/ou additifs, à l'exception de polyépoxydes,
le mélange réactionnel présentant à 40°C une viscosité initiale de 30 à 500 mPa.s (mesurée selon DIN 53019), et le rapport du nombre des groupes NCO du composant A) au nombre des groupes OH du composant B) étant de 1,35:1 à 10:1.

2. Film de résine selon la revendication 1, dans lequel le composant C) est présent en des quantités de 5 à 15 % en poids par rapport aux composants A) à E).

3. Composants composites bidimensionnels renforcés par des fibres, constitués d'au moins un film de résine selon la revendication 1 ou 2 et d'au moins une couche fibreuse bidimensionnelle, le film de résine étant entièrement durci.

4. Composants composites bidimensionnels renforcés par des fibres selon la revendication 3, **caractérisés en ce que** la couche fibreuse est constituée d'un matériau fibreux de verre, de carbone, de plastique, de fibres métalliques, de fibres naturelles ou de matériau fibreux minéraux tels que les fibres de basalte, ou de fibres céramiques, ou de mélanges de ceux-ci.

5. Procédé de fabrication de films de résine selon la revendication 1 ou 2, **caractérisé en ce que**
i) pour fabriquer une formulation de polyols X, on mélange les composants B) à E) à des températures de 40 à 80°C, de préférence de 50 à 70°C,
ii) pour fabriquer le mélange de réactifs, on mélange la formulation de polyols X de l'étape i) au composant A) à des températures comprises entre 10 et 80°C,
iii) on transforme le mélange de réactifs de ii), de préférence entre deux feuilles de séparation, pour obtenir un film de résine partiellement durci.

6. Procédé de fabrication de composants composites renforcés par des fibres selon la revendication 3 ou 4, **caractérisé en ce qu'**on applique les uns sur les autres en couches un ou plusieurs films de résine fabriqués par le procédé selon la revendication 5 et une ou plusieurs couches fibreuses, et on durcit en 1 à 4 minutes le ou les plusieurs films de résine à 110 à 140°C sous une pression de 1 à 100 bar ou sous vide.

7. Utilisation des films de résine selon la revendication 1 ou 2 ou des composants composites bidimensionnels renforcés par des fibres selon la revendication 3 ou 4 pour fabriquer des composants de carrosserie d'automobile ou en construction aéronautique, dans des composants de la construction de bâtiments ou de la construction routière (p.ex. les plaques d'égouts), pour fabriquer des pales de rotor d'éoliennes et des structures soumises à de fortes sollicitations, et en tant que couche adhésive entre des couches de verre, de plastique et/ou de métal.
